# EUROPÄISCHE PATENTANMELDUNG

(11) **EP 4 756 363 A1**
(43) Veröffentlichungstag der Anmeldung: **10.06.2026**
(21) Anmeldenummer: 24218243.4
(22) Anmeldetag: 09.12.2024
(51) Int. Cl.: G01B 9/02, G01B 11/02

(54) **SYSTEM ZUR BEREITSTELLUNG EINES INTERFERENZSIGNALS FÜR EINE INTERFEROMETRISCHE ABSTANDSMESSUNG**

(71) Anmelder: attocube systems AG, 85540 Haar (DE)
(72) Erfinder: Schäfermeier, Clemens, 85540 Haar (DE)
(74) Vertreter: DTS Patent- und Rechtsanwälte PartmbB

(57) **Zusammenfassung**

Die vorliegende Erfindung betrifft ein System (10) zur Bereitstellung eines Interferenzsignals für eine interferometrische Abstandsmessung; umfassend eine Strahlungsquelle (12) zum Erzeugen einer kohärenten Strahlungsemission; ein Interferometermodul (16), das dazu eingerichtet ist, anhand eines ersten Teils der Strahlungsemission eine erste Reflexion an einer Referenzfläche (20) zu erzeugen und anhand eines zweiten Teils der Strahlungsemission eine zweite Reflexion an einer Zielfläche (22) zu erzeugen, so dass das Interferenzsignal durch die erste Reflexion und die zweite Reflexion erzeugt wird; und eine Apertur (36), die im Strahlengang (24) des zweiten Teils der Strahlungsemission angeordnet ist; wobei die Apertur (36) eine Apertur-Fläche umschließt und die Zielfläche (22) eine Zielflächeninhalt aufweist, wobei das Verhältnis der Apertur-Fläche zum Zielflächeninhalt 0,4 bis 10 beträgt. Sie betrifft ferner eine Anordnung und ein Verfahren.

## Beschreibung

Die vorliegende Erfindung betrifft ein System zur Bereitstellung eines Interferenzsignals für eine interferometrische Abstandsmessung. Sie betrifft ferner eine Anordnung für eine interferometrische Abstandsmessung zwischen einer Referenzfläche und einer Zielfläche, insbesondere für eine absolute oder relative Abstandsmessung, sowie ein entsprechendes Verfahren.

Interferometrische Verfahren können zur Messung von absoluten Abständen und zur Messung von Abstandsveränderungen (englisch: *displacement*) relativ zu einem Ausgangswert genutzt werden. Die fortschreitende Entwicklung verschiedener Messaufbauten, ihre Miniaturisierung sowie die modernen Möglichkeiten der Datenverarbeitung eröffnen zusätzliche Einsatzfelder derartiger Techniken, etwa für die Positionierung und Überwachung von Bauteilen oder Werkzeugen.

Aus der DE 10 2017 113 997 B4 sind eine Vorrichtung und ein Verfahren zur interferometrischen Vermessung bekannt. Dabei wird Interferometrie verwendet, um die der Rotation eines Körpers um eine Rotationsachse interferometrisch zu vermessen.

Die EP 3 418 678 A1 schlägt ein Verfahren und einen Detektor zur Bildformung in Korrelation mit Interferometrie vor. Dabei soll parallel zu einer interferometrischen Messung auch eine Bildgebung einer Oberfläche erfolgen. Das Verfahren erlaubt eine relative Messung von Abständen und Abstandsveränderungen.

Aus der EP 2 847 538 A1 ist ein Messgerät mit einem Interferometer und einem ein dichtes Linienspektrum definierenden Absorptionsmedium bekannt.

Aus der DE 10 2015 110 362 B4 sind ein Verfahren und eine Vorrichtung zur interferometrischen Absolutmessung einer Entfernung bekannt. Dabei wird Interferometrie zum Messen einer absoluten Entfernung verwendet. Die Frequenz einer kohärenten Lichtquelle wird durch mechanisches Verstellen der Länge eines Referenz-Interferometers zyklisch durchgestimmt und eine Absorptionslinie bei einer bekannten Wellenlänge kann dazu dienen, eine bestimmte Wellenlänge konstant zu halten.

Um für verschiedene Anwendungen optimale Resultate zu erhalten, werden typischerweise unterschiedliche Sensorköpfe verwendet, die beispielsweise für spezifische Abstände beziehungsweise Bereiche von Abständen geeignet sind. Die ist für Hersteller und Kunden ein erheblicher Mehraufwand. Ferner herrscht steter Bedarf, Messungen mit besonders gutem Signal-zu-Rauschen-Verhältnis ausführen zu können, insbesondere bei Messungen über größere Strecken.

Eine Aufgabe der Erfindung besteht daher darin, die bekannten Systeme und Verfahren zur Abstandsmessung mittels Laserinterferometrie hinsichtlich ihrer Flexibilität und Genauigkeit zu verbessern.

Diese Aufgabe wird erfindungsgemäß gelöst durch ein System mit den Merkmalen des Anspruchs 1, eine Anordnung mit den Merkmalen des Anspruchs 9 sowie ein Verfahren mit den Merkmalen des Anspruchs 10. Vorteilhafte Ausgestaltungen sind in den Unteransprüchen angegeben.

Gemäß Anspruch 1 wird die Aufgabe gelöst durch ein System zur Bereitstellung eines Interferenzsignals für eine interferometrische Abstandsmessung, insbesondere für eine absolute oder relative Abstandsmessung, umfassend eine Strahlungsquelle zum Erzeugen einer kohärenten Strahlungsemission. Das System umfasst ferner ein Interferometermodul, das dazu eingerichtet ist, anhand eines ersten Teils der Strahlungsemission eine erste Reflexion an einer Referenzfläche zu erzeugen und anhand eines zweiten Teils der Strahlungsemission eine zweite Reflexion an einer Zielfläche zu erzeugen, so dass das Interferenzsignal durch die erste Reflexion und die zweite Reflexion erzeugt wird. Es umfasst zudem eine Apertur, die im Strahlengang des zweiten Teils der Strahlungsemission angeordnet ist. Dabei weist die Apertur eine Apertur-Fläche auf und die Zielfläche weist einen Zielflächeninhalt auf, wobei das Verhältnis der Apertur-Fläche zum Zielflächeninhalt 0,4 bis 10 beträgt.

Das System beruht auf der überraschenden Erkenntnis, dass durch Anordnen einer Apertur im Strahlengang des zweiten Teils der Strahlungsemission das Signal-zu-Rauschen-Verhältnis beziehungsweise ein Interferenzkontrast beziehungsweise die sogenannte "Visibility" des Interferenzsignals bei einer Interferenzmessung verbessert wird.

Die genannten Verbesserungen werden vor allem in Fällen erreicht, bei denen im Messpfad eine geometrische Limitation vorliegt. Solche Limitationen können etwa darin bestehen, dass die Zielfläche, an welcher der Strahl reflektiert wird, größer ist als die Fläche, durch welche die zweite Reflexion in das Interferometer eingekoppelt wird. Dadurch kommt es beim Einkoppeln der vom Target reflektierten Strahlung zu einem "Abschneiden" an den Rändern der Einkopplungsfläche des Interferometers. Dadurch wird die Charakteristik der Strahlung der zweiten Reflexion so verändert, dass das Signal einer Interferenz mit der ersten Reflexion verschlechtert wird.

In ähnlicher Weise kann eine geometrische Limitation darin bestehen, dass die Zielfläche kleiner ist als der auf sie auftreffende zweite Teil der Strahlungsemission. Vor allem bei einem großen Abstand zwischen dem Interferometermodul und der Zielfläche, beispielsweise mehr als 10 m, kann es zu einer so starken Auffächerung des Strahls der zweiten Strahlungsemission kommen, dass nur ein seitlich beschnittener Teil auf die Zielfläche trifft. Auch in diesem Fall kommt es zu einer gegenüber der ersten Reflexion veränderten Charakteristik der zweiten Reflexion, sodass sich auch das Interferenzsignal verschlechtert.

Durch die Apertur kann ferner erreicht werden, dass die Strahlung der zweiten Reflexion mit verringerter Intensität in das Interferometermodul wieder eingekoppelt wird; dadurch kann ohne Verwenden eines Attenuator eine Sättigung des Detektors vermieden werden. Alternativ oder zusätlzich kann dadurch ein geeignetes Verhältnis zwischen der Intensität der ersten und zweiten Reflexion für das Erhalten des Interferenzsignals erreicht werden.

Insbesondere wird die Apertur zwischen einer Auskopplungsfläche, an der der erste Teil der Strahlungsemission etwa aus einem Lichtleiter ausgekoppelt wird, und der Zielfläche angeordnet.

Bei einer physikalischen Modellierung ergibt sich, dass der zweite Teil der Strahlungsemission typischerweise einen größeren Strahlquerschnitt aufweist als der Durchmesser der Zielfläche. Daher wird der Strahl bei der Reflexion seitlich "beschnitten". Die reflektierte Welle folgt keiner Gauß-förmigen Verteilung mehr. Im Interferometermodul interferiert der reflektierte Strahl mit einem im wesentlichen Gauß-förmigen Strahl, wobei es zu "Rauschen" des Signals kommt. Indem der Strahl bereits durch die Apertur seitlich beschnitten wird, kann er über eine längere Strecke wieder zu einer Gauß-förmigen Verteilung zurück gelangen.

Die Modellierung zeigt, dass der Effekt der Apertur mit einem bestimmten Durchmesser vom Abstand zum Target abhängt. Es kann optimiert werden, welche Apertur bei welchem Abstand den besten Effekt hat.

Für das Verhältnis der von der Apertur umschlossenen Apertur-Fläche zum Zielflächeninhalt haben die Erfinder erkannt, dass ein Wert von 0,4 bis 10 zu einer deutlichen Verbesserung gegenüber Aufbauten ohne eine solche Apertur führt. Bei weiteren Beispielen kann der Wert zwischen 0,5 und 8, bevorzugt zwischen 0,75 und 5 liegen, wobei ebenfalls ein verbessertes Signal-zu-Rauschen-Verhältnis erhalten wird.

Vorliegend soll die Apertur-Fläche als der Flächeninhalt der vom Rand der Apertur umschlossenen Fläche verstanden werden. Zum Beispiel kann eine kreisrunde Apertur vorgesehen sein, wobei dann die Apertur-Fläche proportional zum Quadrat des Apertur-Durchmessers ist.

Ferner soll der Zielflächeninhalt als der Flächeninhalt der Fläche verstanden werden, an welcher der zweite Teil der Strahlungsemission reflektiert wird. Insbesondere ist der Zielflächeninhalt der Flächeninhalt der effektiv reflektierenden Fläche.

Bei einer Verteilung der reflektierten Intensität für eine Fläche kann als effektiv reflektierend zum Beispiel der Teil der Fläche betrachtet werden, innerhalb dessen die Intensitätsverteilung von einem Maximum auf 1/e² abfällt. Es kann also dazu kommen, dass bei einer größeren Targetfläche nur ein Teil der dem Sensor zugewandten Oberfläche als eigentliche, effektive "Zielfläche" für die zweite Reflexion betrachtet wird.

Beispielsweise kann die Zielfläche als für diesen Zweck an einem Gegenstand angebrachtes Target ausgebildet sein, beispielsweise mit einer verspiegelten Oberfläche, sodass die Reflexion maximiert wird, oder mit einer anderen Oberflächenbehandlung und/oder Strukturierung zum Erhalten definierter Reflexionseigenschaften. In diesem Fall kann der Zielflächeninhalt der Flächeninhalt der verspiegelten beziehungsweise reflektierend wirkenden Fläche sein. Die Zielfläche kann ferner einen Retroreflektor umfassen, bei dem mittels einer Spiegelanordnung eine winkelunabhängige Reflexion erzielt wird; als Zielfläche wird dann die Fläche verstanden, bei der das einfallende Licht durch den Retroreflektor reflektiert wird.

Die Strahlungsquelle kann beispielsweise eine Laserquelle sein. Die kohärente Strahlungsemission weist insbesondere eine Wellenlänge auf, die optional von einem Modulationsparameter abhängig sein kann. Der Modulationsparameter kann beispielsweise ein elektrischer Parameter sein, mit dem die Strahlungsquelle betrieben wird. Insbesondere kann eine "durchstimmbare" Strahlungsquelle vorgesehen sein, bei der die Wellenlänge durch Variieren des Modulationsparameters in einem Bereich gebildet sein kann.

Bei einer Ausbildung ist das Interferometermodul als Fabry-Pérot-Interferometer ausgebildet, wobei insbesondere die Referenzfläche (20) von einer Stirnfläche eines Lichtleiters gebildet wird. Dies erlaubt vorteilhafterweise einen besonders einfachen und äußerst kompakten Aufbau des Interferometers.

Ferner wird vorteilhafterweise direkt das Ende des Lichtleiters an einem Messkopf des Systems als Referenzfläche verwendet und es ist keine separate Einrichtung notwendig, etwa ein Strahlteiler für einen Referenzarm der Strahlungsemission. Vielmehr wird der erste Teil der Strahlungsemission am Ende des Lichtleiters reflektiert.

Der zweite Teil der Strahlungsemission wird hingegen ausgekoppelt, etwa ausgehend von einem Messkopf, und auf die Zielfläche gelenkt. Dabei können zusätzliche optische Einrichtungen vorgesehen sein, um die Richtung des Strahls anzupassen oder ihn zu formen, beispielsweise eine Linse oder Linsenanordnung.

Bei einer weiteren Ausbildung kann das Interferometermodul als Michelson-Interferometer ausgebildet sein, wobei ein Strahlteiler vorgesehen ist, welcher den ersten Teil der Strahlungsemission auf eine separat von dem Lichtleiter ausgebildete Referenzfläche lenkt, während der zweite Teil der Strahlungsemission auf die Zielfläche gelenkt wird.

Es kommt zu Reflexionen der Teile der Strahlungsemission, die auf die Referenzfläche beziehungsweise auf die Zielfläche treffen. Das reflektierte Licht wird auf an sich bekannte Weise überlagert, etwa durch Einkoppeln in einen gemeinsamen Lichtleiter und Auftreffen auf einen Detektor, wo es zu einer Interferenz kommt.

Für die Interferometrie wird eine Messkavität benötigt, die bei der Erfindung etwa mittels eines Fabry-Perot-Interferometers bereitgestellt werden kann. Dabei kommt es zur Referenz-Reflexion am Ende des Lichtleiters, wo die Strahlungsemission ausgekoppelt und auf die Zielfläche gerichtet wird. An der Grenzfläche zwischen dem Ende des Lichtleiters und des umgebenden Mediums (etwa Luft, Gas oder auch Vakuum) ändert sich der Brechungsindex sprunghaft und es kommt zur teilweisen Reflexion von auftreffendem Licht. Ferner wird das bei der zweiten Reflexion von der Zielfläche reflektierte Licht an dieser Grenzfläche in den Lichtleiter eingekoppelt.

Im vorliegenden Fall kann die zwischen der Referenzfläche und der Zielfläche ausgebildete Kavität des Fabry-Perot-Interferometers mit einer geringen Finesse ("low-finesse") ausgebildet sein. Beispielsweise wird bei der Referenz-Reflexion etwa 4% des auftreffenden Lichts an der Referenzfläche reflektiert (das heißt am Ende des Lichtleiters), während das übrige Licht transmittiert wird. Es kann vorgesehen sein, dass die von der Zielfläche reflektierte zweite Reflexion eine ähnliche Intensität aufweist, um ein vorteilhaftes Signal-Rauschen-Verhältnis zu erhalten. Erfolgt die zweite Reflexion an einer stark reflektierenden Zielfläche, so kann beispielsweise ein räumlicher Filter zur Abschwächung der Intensität der zweiten Reflexion verwendet werden. Das verwendete Fabry-Perot-Inferferometer erlaubt durch die niedrige Finesse insbesondere Messungen mit weniger stark reflektierenden Zielflächen, etwa einer Glasfläche.

Bei der Wahl eines geeigneten Aufbaus des Fabry-Perot-Interferometers ist zu berücksichtigen, dass für ein optimales Interferenz-Signal die Intensität der ersten Reflexion an der Referenzfläche ähnlich groß sein sollte wie die Intensität der zweiten Reflexion an der Zielfläche. Bei einer stark reflektierenden Zielfläche kann ein Abschwächer zum Verringern der Intensität verwendet werden. Hier kommt es bei destruktiver Interferenz im Extremfall zu einer Auslöschung des Signals, während das Signal im Extremfall einer positiven Interferenz verdoppelt wird.

Das System kann ferner ein Detektormodul umfassen, das dazu eingerichtet ist, das Interferenzsignal zu erfassen. Das Detektormodul kann auf an sich bekannte Weise mit einer Photodiode ausgebildet sein. Zum Erfassen des Interferenzsignals wird beispielsweise die Intensität des Lichts aus der Kombination der ersten und zweiten Reflexion erfasst. Bei einer destruktiven Interferenz kommt es dabei zu einer niedrigeren, bei einer konstruktiven Interferenz zu einer höheren Intensität.

Ferner kann ein Auswertungsmodul umfasst sein, das dazu eingerichtet ist, anhand des erfassten Interferenzsignals die absolute oder relative Abstandsmessung auszuführen. Die mittels des Detektormoduls gemessene Intensität wird durch das Auswertungsmodul ausgewertet, insbesondere in Kombination mit Informationen über die Wellenlänge der Strahlungsemission, insbesondere bei Erreichen einer ersten und/oder zweiten Referenzwellenlänge.

Bei einer weiteren Ausbildung liegt die Apertur-Fläche zwischen der einfachen und der doppelten Strahlquerschnittsfläche des zweiten Teils der Strahlungsemission. Insbesondere wird der relevante Strahldurchmesser bei 1/e² Intensitätsabfall gemessen.

Bei einer Weiterbildung ist zumindest ein geometrischer Parameter der Apertur einstellbar. Dadurch kann vorteilhafterweise die Apertur-Fläche eingestellt werden, um die Apertur für den jeweiligen Aufbau zu optimieren und ihn beispielsweise für verschiedene Abstände zwischen einem Messkopf und der Zielfläche anzupassen.

Beispielweise kann der Durchmesser einer kreisrunden Apertur einstellbar sein.

Ferner kann bei einer anderen Geometrie der Apertur ein anderer geometrischer Parameter einstellbar sein, etwa eine Länge oder Breite einer rechteckigen Form oder einer der Radien der Halbachsen einer elliptischen Form.

Bei einer Ausbildung entspricht zumindest ein geometrischer Parameter der Apertur im Wesentlichen einem entsprechenden geometrischen Parameter der Zielfläche oder des zweiten Teils der Strahlungsemission.

Die Apertur, durch welche der zweite Teil der Strahlungsemission hindurchtritt, und die Zielfläche, auf welche der zweite Teil der Strahlungsemission trifft, können dann zumindest hinsichtlich des geometrischen Parameters gleich geformt sein.

Insbesondere bezieht sich dabei der geometrische Parameter auf einen Strahlungsquerschnitt des zweiten Teils der Strahlungsemission. Beispielsweise kann die Zielfläche oder der Querschnitt des zweiten Teils der Strahlungsemission rund, elliptisch oder rechteckig ausgebildet sein, wobei dann auch die Apertur entsprechend rund, elliptisch beziehungsweise rechteckig, beispielsweise mit den gleichen Verhältnissen der Seitenlängen oder Radien, ausgebildet sein kann.

Bei einer weiteren Ausbildung ist die Apertur höchstens 10 cm, bevorzugt höchstens 5 cm, weiter bevorzugt höchstens 2 cm von einer Auskopplungsfläche des zweiten Teils der Strahlungsemission entfernt angeordnet.

Bei einer Weiterbildung ist die Apertur in einen Messkopf eines Interferometers oder in einen Aufsatz für einen Messkopf integriert. Ein Aufsatz kann dabei insbesondere auswechselbar ausgebildet sein, indem er lösbar an dem Messkopf befestigbar ist, beispielsweise durch Aufstecken.

Bei einer Ausbildung ist die Apertur im Strahlengang vor einer Linse des Messkopfes angeordnet. Alternativ kann die Apertur nach einer Linse des Messkopfes oder zwischen zwei Linsen angeordnet sein. Als "vor der Linse" wird dabei insbesondere eine Anordnung zwischen einer Auskopplungsfläche des zweiten Teils der Strahlungsemission und der Linse verstanden. Entsprechend wird als "nach der Linse" eine Anordnung auf der der Auskopplungsfläche abgewandten Seite der Linse verstanden.

Bei der Anordnung für eine interferometrische Abstandsmessung zwischen einer Referenzfläche und einer Zielfläche, insbesondere für eine absolute oder relative Abstandsmessung, ist zwischen einem Messkopf und einer Zielfläche eine Apertur angeordnet; wobei die Apertur eine Apertur-Fläche umschließt, welche das 0,4-bis 10--Fache eines Zielflächeninhalts der Zielfläche aufweist.

Bei dem Verfahren zum Bereitstellen eines Interferenzsignals für eine interferometrische Abstandsmessung zwischen einer Referenzfläche und einer Zielfläche, insbesondere für eine absolute oder relative Abstandsmessung, wird zwischen einem Messkopf eines Interferometers und der Zielfläche eine Apertur angeordnet. Dabei umschließt die Apertur eine Apertur-Fläche, welche das 0,4-bis 10-Fache eines Zielflächeninhalts der Zielfläche aufweist.

Das Verfahren dient insbesondere dem Betreiben des Systems. Es weist daher die gleichen Vorteile auf wie das System und kann ferner prinzipiell auf die gleiche Weise weitergebildet werden wie das System. Umgekehrt kann auch das System beziehungsweise die Anordnung analog zu dem Verfahren weitergebildet werden.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Darstellung eines Ausführungsbeispiels des Systems;
- Fig. 2: ein Diagramm mit einer Simulation des Interferenzkontrastes für unterschiedlich große Aperturen; und
- Fig. 3: ein Flussdiagramm eines Ausführungsbeispiels des Verfahrens.

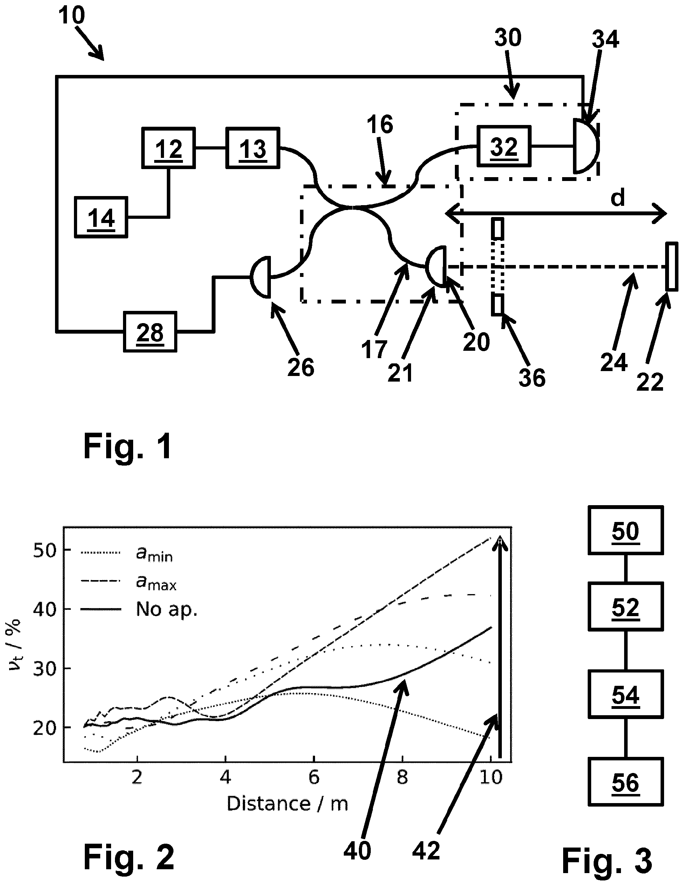

Mit Bezug zu Fig. 1 wird eine schematische Darstellung eines Ausführungsbeispiels des Systems erläutert.

Das System 10 umfasst bei dem Ausführungsbeispiel eine Strahlungsquelle 12.

Diese ist bei dem vorliegenden Ausführungsbeispiel als Laserquelle 12 ausgebildet.

Die Laserquelle 12 ist mit einem Steuermodul 14 gekoppelt.

Bei dem Ausführungsbeispiel ist eine durchstimmbare Laserquelle 12 vorgesehen. Das Steuermodul 14 gibt einen Bias-Strom aus, der die Wellenlänge einer mittels der Laserquelle 12 erzeugten Strahlungsemission bestimmt. Der Bias-Strom dient daher bei dem vorliegenden Ausführungsbeispiel als ein Modulationsparameter, von dem die Wellenlänge abhängt.

Bei weiteren Ausführungsbeispielen können andere Modulationsparameter verwendet werden, etwa eine Temperatur oder eine Länge einer Resonatorkavität der Laserquelle 12.

Die durch die Laserquelle 12 erzeugte Strahlungsemission wird in einen Lichtleiter eingekoppelt und gelangt zu einem Isolator 13, der verhindert, dass Licht zurück zur Laserquelle 12 gelangt.

Mit dem Isolator 13 ist über einen Lichtleiter ein Interferometermodul 16 optisch gekoppelt. Dieses umfasst zumindest einen Lichtleiter 17, an dessen Ende sich ein Messkopf 21 befindet. Bei diesem wird an einer Stirnfläche des Lichtleiters 17 Licht als Lichtstrahl 24 ausgekoppelt.

Ein Teil der erzeugten Strahlungsemission wird bei dem Ausführungsbeispiel zu einem Referenzmodul 30 geleitet und durchläuft dort eine Referenz-Gaszelle 32. Das dort transmittierte Licht wird von einem Referenz-Detektor 34 erfasst, wobei insbesondere die Intensität der transmittierten Strahlung detektiert wird.

Bei dem Ausführungsbeispiel wird eine Cyanid-Gaszelle als Referenz-Gaszelle 32 verwendet. Bei weiteren Ausführungsbeispielen können andere gasförmige Materialien, zum Beispiel Acetylen oder Kohlenmonoxid, oder andere Verfahren angewandt werden.

Das Referenzmodul 30 beziehungsweise der Referenz-Detektor 34 ist mit dem Auswertungsmodul 28 gekoppelt, wo die erfassten Werte für die Intensität des transmittierten Lichts verarbeitet werden.

Bei der sprunghaften Änderung des Brechungsindexes an der Grenzfläche zwischen dem Lichtleiter 17 und dem umgebenden Medium (etwa Gas, Luft oder Vakuum) kommt es zu einer ersten Reflexion eines ersten Teils der Strahlungsemission. Diese Fläche ist daher bei dem Ausführungsbeispiel eine Referenzfläche 20.

Das heißt, der erste Teil des Lichts wird in den Lichtleiter 17 zurück geworfen, während ein zweiter Teil ausgekoppelt wird.

Der Messkopf 21 ist so ausgebildet und angeordnet, dass der als Lichtstrahl 24 ausgekoppelte zweite Teil der Strahlungsemission auf eine Zielfläche 22 trifft und dort reflektiert wird. Diese zweite Reflexion wird zum Messkopf 21 zurück geworfen und in den Lichtleiter 17 eingekoppelt.

Bei dem Ausführungsbeispiel ist die Zielfläche 22 kreisrund mit einem Zielflächen-Durchmesser ausgebildet. Bei weiteren Ausführungsbeispielen sind andere geometrische Formen denkbar, etwa eine rechteckige oder quadratische Form.

Die Zielfläche 22 weist hier eine verspiegelte Oberfläche auf. Bei weiteren Ausführungsbeispielen kann die Zielfläche 22 beispielweise glatt geschliffen oder anderweitig behandelt, beschichtet oder strukturiert sein, um eine verbesserte Reflexion zu erreichen. Die Zielfläche 22 kann ferner auch ohne eine besondere Behandlung verwendet werden, wenn die reflektierenden Eigenschaften zum Ausführen der Interferometrie ausreichen. In einem weiteren Beispiel kann die Zielfläche 22 durch einen Retroreflektor gebildet werden.

Dabei ist ein Zielflächeninhalt als der Flächeninhalt der Fläche definiert, an der eine effektive Reflexion des zweiten Teils der Strahlungsemission erfolgt. Bei dem Beispiel erzeugt das auf ein Target auftreffende Licht des zweiten Teils der Strahlungsemission eine Intensitätsverteilung auf der Oberfläche des Targets. Als effektiv reflektierend wird bei dem Beispiel der Teil der Fläche betrachtet, innerhalb dessen die Intensitätsverteilung von einem Maximum bis zum 1/e² fachen Teil der maximalen Intensität abfällt.

In weiteren Beispielen ist die Zielfläche 22 kleiner als der Durchmeser des auftreffenden Lichtstrahls, sodass auch die effektiv reflektierende Fläche entsprechend höchstens so groß sein kann wie der Inhalt der Zielfläche 22.

Bei dem Detektormodul 26 kommt es zu einer Interferenz zwischen dem Licht der ersten Reflexion und dem Licht der zweiten Reflexion und ein Interferenzsignal wird gemessen.

Das System 10 gemäß dem Ausführungsbeispiel umfasst demnach ein Fabry-Perot-Interferometer. Bei weiteren Ausführungsbeispielen können andere Interferometer verwendet werden, insbesondere ein Michelson-Interferometer.

Das Interferometermodul 16 ist so ausgebildet, dass das resultierende Interferenzsignal durch das Detektormodul 26 erfasst wird.

Das Detektormodul 26 ist auf an sich bekannte Weise ausgebildet. Es umfasst insbesondere eine Photodiode.

Mittels des Detektormoduls 26 wird die Intensität des auftreffenden Interferenzsignals erfasst.

Das mit dem Detektormodul 26 gekoppelte Auswertungsmodul 28 wertet das erfasste Interferenzsignal aus und bestimmt anhand einer Phasenmessung beim Durchlaufen eines bestimmten Wellenlängenintervalls den Abstand d zwischen der Referenzfläche 20 und der Zielfläche 22.

Bei dem Ausführungsbeispiel wird anhand der bei dem Referenz-Detektor 34 gemessenen Intensität des durch die Referenz-Gaszelle 32 transmittierten Lichts bestimmt, wann die Strahlungsemission maximal durch die Referenz-Gaszelle 32 absorbiert wird. Dies wird anhand von Minima der Intensität bestimmt. Da die Absorptionsmaxima der Referenz-Gaszelle 32 bei klar definierten Wellenlängen auftreten, kann die Wellenlänge der Strahlungsemission an dieser Stelle genau definiert werden. Beim Überstreichen zweier Absorptionsmaxima kann daher detektiert werden, wann die Strahlungsemission die entsprechenden Wellenlängen aufweist. Das Auswertungsmodul 28 kann daher die Phase des Signals beim Überstreichen eines genau definierten Wellenlängenintervalls bestimmen.

Bei dem Ausführungsbeispiel ist zudem eine Apertur 36 vorgesehen, die zwischen dem Messkopf 21 und der Zielfläche 22 im Strahlengang des Lichtstrahls 24 angeordnet ist.

Die Apertur 36 ist bei diesem Beispiel kreisrund und sie umschließt eine Apertur-Fläche, die etwa dem 2-fachen des Zielflächeninhalts entspricht.

Bei dem konkreten Beispiel ist eine Apertur mit 4 mm Durchmesser vorgesehen, während die Zielfläche (Target) 3 mm Durchmesser aufweist und der zweite Teild er Strahlungsemission etwas 3,8mm Strahldurchmesser bei 1/e² Intensitätsabfall aufweist.

Bei weiteren Ausführungsbeispielen kann ein anderes das Verhältnis der Apertur-Fläche zum Zielflächeninhalt vorliegen, insbesondere zwischen 1 bis 2,5.

Bei dem Beispiel entspricht die geometrische Form der Apertur 36 der Form der Zielfläche 22; beide sind kreisrund.

Bei weiteren Ausführungsbeispielen können die Apertur 36 und die Zielfläche 22 eine andere geometrische Form aufweisen, etwa quadratisch, rechteckig oder elliptisch. Dabei können die geometrischen Formen der Apertur 36 und die Zielfläche 22 einander in zumindest einem geometrischen Parameter entsprechen, beispielweise in einem Seitenverhältnis. Insbesondere kann die geometrische Form der Apertur 36 eine größer skalierte Version der Form der Zielfläche 22 sein.

Bei weiteren Ausführungsbeispielen können die Apertur 36 und die Zielfläche 22 verschiedene Formen aufweisen, beispielweise rund und rechteckig.

Mit Bezug zu Fig. 2 wird ein Diagramm mit einer Simulation des Interferenzkontrastes für unterschiedlich große Aperturen erläutert.

In dem Diagramm ist ein Interferenzkontrast vt (englisch: "visibility") in Abhängigkeit von einem Abstand d zwischen dem Interferometermodul 16 und der Zielfläche 22 aufgetragen. Die durchgezogene Linie 40 zeigt die Kurve für den Fall, dass keine Apertur 36 vorgesehen ist. Die weiteren, unterschiedlich gestrichelten oder gepunkteten Linien zeigen die Kurve für Aperturen 36 mit unterschiedlich großer Apertur-Fläche, wobei in Richtung des Pfeils 42 die Apertur-Fläche zunimmt. Für alle dargestellten Fälle wird von der gleichen Zielfläche 22 ausgegangen, sodass der Zielflächeninhalt konstant ist.

Es zeigt sich ein deutlicher Zusammenhang zwischen dem Effekt der Apertur 36 im Strahlengang und dem Abstand d zwischen Interferometermodul 16 und Zielfläche 22. Tendenziell wird bei größerem Abstand d der maximale Effekt mit einer größeren Apertur 36 erhalten. Die Größe der Apertur 36 kann daher anhand einer durch experimentelle Messung oder durch Simulation erhaltenen Kennlinie oder eines Kennfeldes bestimmt werden, etwa anhand des in Fig. 2 gezeigten Diagramms, das durch eine Simulation ermittelt wurde.

Als weiterer Parameter der Kennlinie beziehungsweise des Kennfeldes kann eine Größe der Zielfläche 22 berücksichtigt werden, alternativ oder zusätzlich dazu auch die Größe des Lichtstrahls 24, insbesondere im Verhältnis zur Geometrie und den Abmessungen der Zielfläche 22.

Mit Bezug zu Fig. 3 wird ein Flussdiagramm eines Ausführungsbeispiels des Verfahrens erläutert.

In einem Schritt 50 wird ein Interferometer bereitgestellt, welches einen Messkopf 21 umfasst.

In einem Schritt 52 wird der Messkopf so angeordnet und ausgerichtet, dass ein vom Interferometer erzeugter und ausgekoppelter Lichtstrahl 24 auf eine Zielfläche 22 trifft.

In einem Schritt 54 wird eine Apertur 36 zwischen dem Messkopf 21 und der Zielfläche 22 angeordnet. Der Lichtstrahl tritt also durch die Apertur 36 hindurch, wird an der Zielfläche reflektiert und tritt dann wieder durch die Apertur 36 hindurch. Es wird wieder ins Interferometer eingekoppelt und interferiert mit einem anderen Teil der gleichen Strahlungsemission.

Dabei umschließt die Apertur 36 eine Apertur-Fläche, welche das 0,5- bis 4-Fache eines Zielflächeninhalts der Zielfläche 22 aufweist.

In einem Schritt 56 wird ein Interferenzsignal erfasst und anhand des Interferenzsignals wird die Abstandsmessung ausgeführt.

### Bezugszeichenliste

- 10: System
- 12: Strahlungsquelle; Laserquelle
- 13: Isolator
- 14: Steuermodul
- 16: Interferometermodul
- 17: Lichtleiter
- 20: Referenzfläche; Auskopplungsfläche
- 21: Messkopf; Kollimator
- 22: Zielfläche
- 24: Lichtstrahl; Strahlengang (Abschnitt)
- 26: Detektormodul
- 28: Auswertungsmodul
- 30: Referenzmodul
- 32: Referenz-Gaszelle
- 34: Referenz-Detektor
- 36: Apertur
- 40: Linie (Referenz)
- 42: Pfeil (zunehmende Apertur-Fläche)
- 50, 52, 54, 56: Schritt

## Patentansprüche

1. System (10) zur Bereitstellung eines Interferenzsignals für eine interferometrische Abstandsmessung; umfassend
eine Strahlungsquelle (12) zum Erzeugen einer kohärenten Strahlungsemission;
ein Interferometermodul (16), das dazu eingerichtet ist, anhand eines ersten Teils der Strahlungsemission eine erste Reflexion an einer Referenzfläche (20) zu erzeugen und anhand eines zweiten Teils der Strahlungsemission eine zweite Reflexion an einer Zielfläche (22) zu erzeugen, so dass das Interferenzsignal durch die erste Reflexion und die zweite Reflexion erzeugt wird; und
eine Apertur (36), die im Strahlengang (24) des zweiten Teils der Strahlungsemission angeordnet ist; wobei
die Apertur (36) eine Apertur-Fläche umschließt und die Zielfläche (22) einen Zielflächeninhalt aufweist, wobei das Verhältnis der Apertur-Fläche zum Zielflächeninhalt 0,4 bis 10 beträgt.

2. System (10) gemäß Anspruch 1,
**dadurch gekennzeichnet, dass**
das Interferometermodul (16) als Fabry-Pérot-Interferometer, wobei insbesondere die Referenzfläche (20) von einer Stirnfläche eines Lichtleiters (17) gebildet wird, oder als Michelson-Interferometer ausgebildet ist.

3. System (10) gemäß einem der vorhergehenden Ansprüche,
**dadurch gekennzeichnet, dass**
die Apertur-Fläche ferner zwischen der einfachen und der doppelten Strahlquerschnittsfläche des zweiten Teils der Strahlungsemission liegt.

4. System (10) gemäß einem der vorhergehenden Ansprüche,
**dadurch gekennzeichnet, dass**
zumindest ein geometrischer Parameter der Apertur (36) einstellbar ist, etwa ein einstellbarer Durchmesser.

5. System (10) gemäß einem der vorhergehenden Ansprüche,
**dadurch gekennzeichnet, dass**
zumindest ein geometrischer Parameter der Apertur (36) einem entsprechenden geometrischen Parameter der Zielfläche (22) oder des zweiten Teils der Strahlungsemission entspricht.

6. System (10) gemäß einem der vorhergehenden Ansprüche,
**dadurch gekennzeichnet, dass**
die Apertur (36) höchstens 10 cm, bevorzugt höchstens 5 cm, weiter bevorzugt höchstens 2 cm von einer Auskopplungsfläche (20) des zweiten Teils der Strahlungsemission entfernt angeordnet ist.

7. System (10) gemäß einem der vorhergehenden Ansprüche,
**dadurch gekennzeichnet, dass**
die Apertur in einen Messkopf (21) oder in einen Aufsatz für einen Messkopf (21) integriert ist.

8. System (10) gemäß einem der vorhergehenden Ansprüche,
**dadurch gekennzeichnet, dass**
die Apertur vor oder nach einer Linse eines Messkopfes (21) angeordnet ist.

9. Anordnung für eine interferometrische Abstandsmessung zwischen einer Referenzfläche (20) und einer Zielfläche (22), insbesondere für eine absolute oder relative Abstandsmessung; wobei
zwischen einem Messkopf (21) und einer Zielfläche (22) eine Apertur (36) angeordnet ist;
wobei die Apertur (36) eine Apertur-Fläche umschließt, welche das 0,4- bis 10-Fache eines Zielflächeninhalts der Zielfläche (22) aufweist.

10. Verfahren zum Bereitstellen eines Interferenzsignals für eine interferometrische Abstandsmessung zwischen einer Referenzfläche (20) und einer Zielfläche (22), insbesondere für eine absolute oder relative Abstandsmessung; wobei
zwischen einem Messkopf (21) und einer Zielfläche (22) eine Apertur (36) angeordnet wird; wobei
die Apertur (36) eine Apertur-Fläche umschließt, welche das 0,4- bis 10-Fache eines Zielflächeninhalts der Zielfläche (22) aufweist.

## Geänderte Patentansprüche

### Geänderte Patentansprüche gemäss Regel 137(2) EPÜ.

1. System (10) zur Bereitstellung eines Interferenzsignals für eine interferometrische Abstandsmessung; umfassend
eine Strahlungsquelle (12) zum Erzeugen einer kohärenten Strahlungsemission;
ein Interferometermodul (16), das dazu eingerichtet ist, anhand eines ersten Teils der Strahlungsemission eine erste Reflexion an einer Referenzfläche (20) zu erzeugen und anhand eines zweiten Teils der Strahlungsemission eine zweite Reflexion an einer Zielfläche (22) zu erzeugen, so dass das Interferenzsignal durch die erste Reflexion und die zweite Reflexion erzeugt wird; und
eine Apertur (36), die im Strahlengang (24) des zweiten Teils der Strahlungsemission angeordnet ist; wobei
die Apertur (36) eine Apertur-Fläche umschließt und die Zielfläche (22) einen Zielflächeninhalt aufweist, wobei der Zielflächeninhalt der Flächeninhalt einer reflektierend wirkenden Fläche ist, wobei die Apertur-Fläche gemäß einer Kennlinie oder eines Kennfeldes in Abhängigkeit von einem Abstand (d) zwischen dem Interferometermodul (16) und der Zielfläche (22) gebildet ist, wobei das Verhältnis der Apertur-Fläche zum Zielflächeninhalt 0,4 bis 10 beträgt.

2. System (10) gemäß Anspruch 1,
**dadurch gekennzeichnet, dass**
das Interferometermodul (16) als Fabry-Perot-Interferometer, wobei insbesondere die Referenzfläche (20) von einer Stirnfläche eines Lichtleiters (17) gebildet wird, oder als Michelson-Interferometer ausgebildet ist.

3. System (10) gemäß einem der vorhergehenden Ansprüche,
**dadurch gekennzeichnet, dass**
die Apertur-Fläche ferner zwischen der einfachen und der doppelten Strahlquerschnittsfläche des zweiten Teils der Strahlungsemission liegt.

4. System (10) gemäß einem der vorhergehenden Ansprüche,
**dadurch gekennzeichnet, dass**
zumindest ein geometrischer Parameter der Apertur (36) einstellbar ist, etwa ein einstellbarer Durchmesser.

5. System (10) gemäß einem der vorhergehenden Ansprüche,
**dadurch gekennzeichnet, dass**
zumindest ein geometrischer Parameter der Apertur (36) einem entsprechenden geometrischen Parameter der Zielfläche (22) oder des zweiten Teils der Strahlungsemission entspricht.

6. System (10) gemäß einem der vorhergehenden Ansprüche,
**dadurch gekennzeichnet, dass**
die Apertur (36) höchstens 10 cm, bevorzugt höchstens 5 cm, weiter bevorzugt höchstens 2 cm von einer Auskopplungsfläche (20) des zweiten Teils der Strahlungsemission entfernt angeordnet ist.

7. System (10) gemäß einem der vorhergehenden Ansprüche,
**dadurch gekennzeichnet, dass**
die Apertur in einen Messkopf (21) oder in einen Aufsatz für einen Messkopf (21) integriert ist.

8. System (10) gemäß einem der vorhergehenden Ansprüche,
**dadurch gekennzeichnet, dass**
die Apertur vor oder nach einer Linse eines Messkopfes (21) angeordnet ist.

9. Anordnung für ein System (10) gemäß einem der vorhergehenden Ansprüche zur Bereitstellung eines Interferenzsignals für eine interferometrische Abstandsmessung zwischen einer Referenzfläche (20) und einer Zielfläche (22), insbesondere für eine absolute oder relative Abstandsmessung; wobei
zwischen einem Messkopf (21) und einer Zielfläche (22) eine Apertur (36) angeordnet ist;
wobei die Apertur (36) eine Apertur-Fläche umschließt, welche das 0,4- bis 10-Fache eines Zielflächeninhalts der Zielfläche (22) aufweist.

10. Verfahren zum Betreiben eines Systems (10) gemäß einem der Ansprüche 1 bis 8 zur Bereitstellung eines Interferenzsignals für eine interferometrische Abstandsmessung zwischen einer Referenzfläche (20) und einer Zielfläche (22), insbesondere für eine absolute oder relative Abstandsmessung; wobei
zwischen einem Messkopf (21) und einer Zielfläche (22) eine Apertur (36) angeordnet wird; wobei
die Apertur (36) eine Apertur-Fläche umschließt, welche das 0,4- bis 10-Fache eines Zielflächeninhalts der Zielfläche (22) aufweist.
